# EUROPÄISCHE PATENTSCHRIFT

(11) **EP 3 418 526 B1**
(45) Veröffentlichungstag und Bekanntmachung des Hinweises auf die Patenterteilung: **08.04.2020**
(21) Anmeldenummer: 18177695.6
(22) Anmeldetag: 14.06.2018
(51) Int. Cl.: F01N 13/18, F01N 1/06, H04R 1/02

(54) **SCHALLERZEUGUNGSBAUGRUPPE**
SOUND GENERATING ASSEMBLY
MODULE DE GÉNÉRATION SONORE

(30) Priorität: 22.06.2017 DE 102017113878
(43) Veröffentlichungstag der Anmeldung: 26.12.2018
(73) Patentinhaber: Eberspächer Exhaust Technology GmbH & Co. KG, 66539 Neunkirchen (DE)
(72) Erfinder: Grötzinger, Sven, 72622 Nürtingen (DE)
(74) Vertreter: Ruttensperger Lachnit Trossin Gomoll

(56) Entgegenhaltungen:
- EP-A1- 2 623 737
- DE-A1-102013 208 186
- DE-A1-102013 217 849

## Beschreibung

Die vorliegende Erfindung betrifft einen Schallerzeugungsbaugruppen-Bausatz, der zum Aufbau einer Schallerzeugungsbaugruppe beispielsweise zur Beeinflussung des akustischen Verhaltens einer Abgasanlage einer Brennkraftmaschine in einem Fahrzeug eingesetzt werden kann.

Zur Beeinflussung des akustischen Verhaltens einer Abgasanlage einer Brennkraftmaschine werden Schallerzeugungsbaugruppen eingesetzt, die zumindest eine Lautsprechereinheit aufweisen. Durch akustische Ankopplung einer derartigen Lautsprechereinheit an den Abgasstrang insbesondere im Bereich eines Endrohrs wird der durch die Lautsprechereinheit generierte Schall dem in den Abgasen transportierten Schall überlagert. Somit wird eine aktive Klanggestaltung bzw. auch eine Minderung des Schallpegels insbesondere an der Mündungsöffnung einer Abgasanlage ermöglicht.

Problematisch ist bei der Integration einer derartigen Schallerzeugungsbaugruppe in ein Fahrzeug, dass bereits der für Abgasanlagen zur Verfügung stehende Bauraum begrenzt ist und die Unterbringung einer zusätzlichen Baugruppe, nämlich einer derartigen Schallerzeugungsbaugruppe, häufig nicht möglich ist. Dabei ist insbesondere zu berücksichtigen, dass die bei verschiedenen Fahrzeugtypen eingesetzten Abgasanlagen und der für diese bereitgestellte Bauraum sich deutlich voneinander unterscheiden können, so dass eine hinsichtlich des Aufbaus einer Abgasanlage und des für diese zur Verfügung stehenden Bauraums bei einem Fahrzeugtyp gestaltete oder optimierte Schallerzeugungsbaugruppe im Allgemeinen bei anderen Fahrzeugtypen keine Anwendung finden kann.

Aus der DE 10 2013 208 186 A1 ist eine Schallerzeugungsbaugruppe für eine Abgasanlage bekannt. In einem Gehäuse eines Schallerzeugungsmoduls ist eine Schall in Richtung zu einer Abgasanlage abgebende Lautsprechereinheit untergebracht. An der Rückseite der Lautsprechereinheit ist in dem Schallerzeugungsmodulgehäuse ein Teil eines Rückvolumens gebildet. Der in dem Schallerzeugungsmodulgehäuse bereitgestellte Teil des Rückvolumens steht über eine in dem Gehäuse gebildete Öffnung in Verbindung steht mit einem in einer Druckausgleichsleitung gebildeten weiteren Teil des Rückvolumens.

Auch die EP 2623737 bildet einen Stand der Technik.

Es ist die Aufgabe der vorliegenden Erfindung, einen Schallerzeugungsbaugruppen-Bausatz zum Aufbau einer Schallerzeugungsbaugruppe für eine Abgasanlage einer Brennkraftmaschine mit erweitertem Einsatzspektrum bereitzustellen.

Erfindungsgemäß wird diese Aufgabe gelöst durch einen Schallerzeugungsbaugruppen-Bausatz gemäß Anspruch 1.

Ein derartiger beispielsweise auch in Form der Lagerhaltung verschiedener Module bereitgestellter Bausatz ermöglicht den Aufbau verschiedenst konfigurierter Schallerzeugungsbaugruppen, die dann jeweils für einen bestimmten Fahrzeugtyp bzw. eine bestimmte Abgasanlage optimiert ausgebildet sind.

Dabei kann die Gruppe von Rückvolumenmodulen wenigstens zwei vorzugsweise im Wesentlichen unverformbar ausgebildete Rückvolumenmodule mit unterschiedlicher Form oder/und Größe ihrer Rückvolumina umfassen. Alternativ oder zusätzlich kann die Gruppe von Rückvolumenmodulen Rückvolumenmodule mit verformbarem Rückvolumenmodulgehäuse umfassen.

Durch die modulartige Ausgestaltung der mit einem erfindungsgemäßen Schallerzeugungsbaugruppen-Bausatz aufzubauenden Schallerzeugungsbaugruppe wird es möglich, mit geeigneter Auswahl der für eine Abgasanlage verwendeten Module einerseits eine optimierte Anpassung an den Aufbau der Abgasanlage bzw. den zur Verfügung stehenden Bauraum zu erzielen. Andererseits kann durch die Modulauswahl auch das akustische Verhalten einer Abgasanlage an einen bestimmten Fahrzeugtyp optimiert angepasst werden.

In dem Schallerzeugungsmodulgehäuse ist ein Teil-Rückvolumen gebildet, das bei mit dem Schallerzeugungsmodulgehäuse akustisch gekoppeltem Rückvolumenmodulgehäuse in Verbindung mit dem Rückvolumen ist.

Um in einfacher Art und Weise die Module der erfindungsgemäßen Schallerzeugungsbaugruppe miteinander verbinden zu können, wird vorgeschlagen, dass an dem Schallerzeugungsmodulgehäuse und an jedem Rückvolumenmodulgehäuse Verbindungsformationen zum vorzugsweise lösbaren Verbinden des Schallerzeugungsmodulgehäuses mit dem Rückvolumenmodulgehäuse vorgesehen sind.

Eine besonders einfache Anpassbarkeit des akustischen Verhaltens kann dadurch erreicht werden, dass wenigstens eines der Rückvolumenmodulgehäuse zum Verändern der Form oder/und der Größe des Rückvolumens formveränderbar ist. Hierzu kann beispielsweise das Rückvolumenmodulgehäuse als vorzugsweise flexibles Rohr ausgebildet sein.

Die vorliegende Erfindung wird nachfolgend mit Bezug auf die beiliegenden Figuren detailliert beschrieben. Es zeigt:
- Fig. 1: in prinzipieller Darstellung eine an einer Abgasanlage vorgesehene Schallerzeugungsbaugruppe;
- Fig. 2: in ihren Darstellungen a) und b) in prinzipieller Ansicht Rückvolumenmodule mit Rückvolumenmodulgehäusen unterschiedlicher Baugröße;
- Fig.3: in ihren Darstellungen a) und b) in prinzipieller Ansicht ein Rückvolumenmodul mit einem in unterschiedliche Formen gebrachten flexiblen Rückvolumenmodulgehäuse;
- Fig. 4: in ihren Darstellungen a) und b) in prinzipieller Ansicht Rückvolumenmodule mit Rückvolumenmodulgehäusen unterschiedlicher Form.

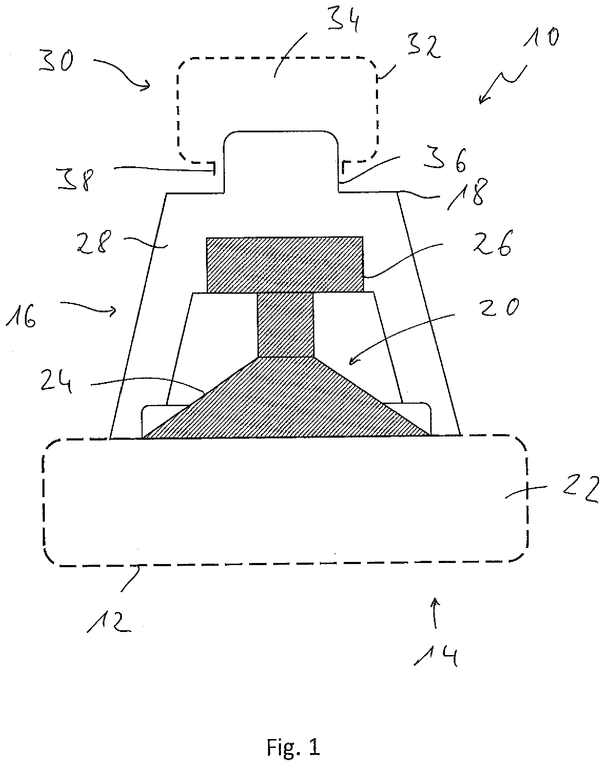

Die Fig. 1 zeigt in prinzipieller Darstellung eine Schallerzeugungsbaugruppe 10, die an einem Abgasführungselement 12, beispielsweise einem Endrohr, einer Abgasanlage 14 einer Brennkraftmaschine in einem Fahrzeug angeordnet ist.

Die Schallerzeugungsbaugruppe 10 umfasst ein Schallerzeugungsmodul 16 mit einem Schallerzeugungsmodulgehäuse 18, das an dem Abgasführungselement 12 angebracht ist. In dem Schallerzeugungsmodulgehäuse 18 ist eine Lautsprechereinheit 20 derart angeordnet, dass der durch diese generierte bzw. abgegebene Schall in das abgasführende Volumen 22 des Abgasführungselements 12 eingestrahlt und somit dem Schall überlagert wird, der in dem in dem abgasführenden Volumen 22 strömendem Abgas transportiert wird bzw. sich darin ausbreitet.

Die Lautsprechereinheit 20 umfasst einen beispielsweise herkömmlich aufgebauten Lautsprecherbereich 24 mit einer zur Schwingung angeregten Membran und einen Elektromagnetbereich 26, welcher bei entsprechender Ansteuerung die Membran bzw. Membranen des Lautsprecherbereichs 24 zur Durchführung von Schwingungen anregt. Zumindest ein Teil der Lautsprechereinheit 20 kann in einem in dem Schallerzeugungsmodulgehäuse 18 ausgebildeten Teil-Rückvolumen 28 angeordnet sein. Die Größe bzw. die Formgebung dieses Teil-Rückvolumens beeinflusst das akustische Verhalten des Schallerzeugungsmoduls 16.

Um dieses akustische Verhalten weiter beeinflussen zu können, umfasst die Schallerzeugungsbaugruppe 10 ferner ein Rückvolumenmodul 30. Das nur in prinzipieller Darstellung gezeigte Rückvolumenmodul 30 umfasst ein Rückvolumenmodulgehäuse 32, in welchem ein Rückvolumen 34 ausgebildet ist. Das Rückvolumenmodulgehäuse 32 ist mit dem Schallerzeugungsmodulgehäuse 18 derart verbunden, dass das im Rückvolumenmodulgehäuse 32 gebildete Rückvolumen 34 in Verbindung ist mit dem im Schallerzeugungsmodulgehäuse 18 gebildeten Teil-Rückvolumen 28. Um diese Verbindung zu erzeugen, kann an dem Schallerzeugungsmodulgehäuse 18 ein beispielsweise rohrstutzenartiger Ansatz eine Verbindungsformation 36 bereitstellen, welche mit einer komplementär geformten Verbindungsformation 38 am Rückvolumenmodulgehäuse 32 beispielsweise durch Ineinandereinstecken in Verbindung gebracht werden kann. Befestigungsmittel, wie beispielsweise eine Rohrschelle, Klebstoff oder dergleichen, können dazu eingesetzt werden, eine ein Loslösen des Rückvolumenmodulgehäuses 32 verhindernde stabile Anbindung zu erzeugen. Es ist darauf hinzuweisen, dass auch andere Arten der Verbindung, beispielsweise durch den Einsatz rohr- bzw. schlauchartiger Verbindungselemente zwischen den beiden Gehäusen 18, 32 zur Anwendung kommen können.

Durch die Auswahl der Form und der Größe des Rückvolumenmodulgehäuses 32 bzw. des darin ausgebildeten Rückvolumens 34 wird es möglich, einerseits einen Einfluss auf den für eine Schallerzeugungsbaugruppe 10 beanspruchten Bauraum zu nehmen, um somit diese Schallerzeugungsbaugruppe 10 an die in einem Fahrzeug gegebenen Bauraumverhältnisse anpassen zu können. Andererseits beeinflussen Form und Größe des Rückvolumens 34 das akustische Verhalten der Schallerzeugungsbaugruppe 10, so dass durch die Auswahl der Form bzw. der Größe des Rückvolumengehäuses 32 bzw. des Rückvolumens 34 auch die akustische Charakteristik der Schallerzeugungsbaugruppe 10 an den vorgesehenen Einsatzzweck angepasst werden kann.

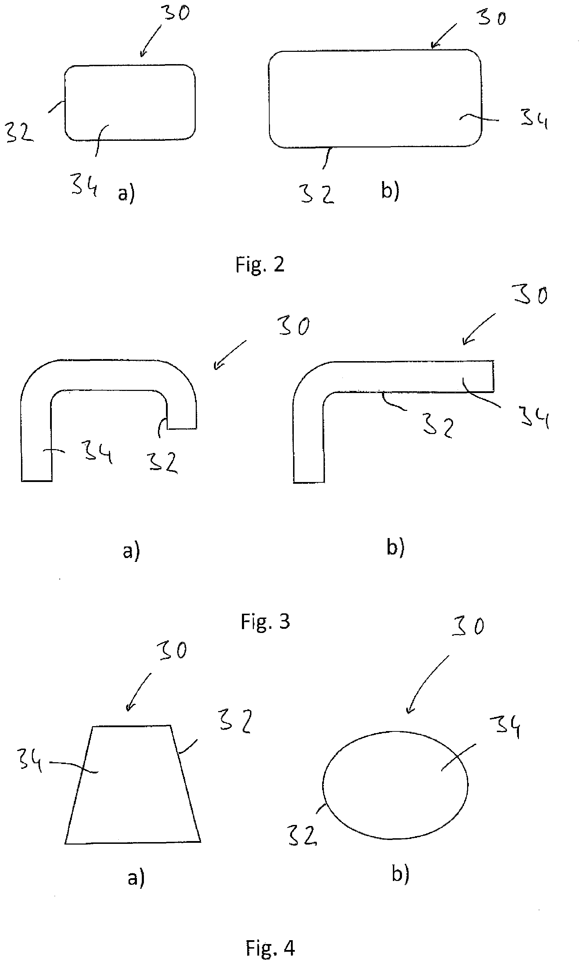

Die Fig. 2 bis 4 zeigen jeweils in prinzipieller Darstellung verschiedene Möglichkeiten, um das Rückvolumengehäuse 32 bzw. das Rückvolumen 34 an verschiedene Einsatzzwecke anzupassen. So zeigt die Fig. 2 in ihren Darstellungen a) und b) Rückvolumengehäuse 32 mit darin gebildeten Rückvolumina 34, die sich grundsätzlich in der Größe, nicht aber in der Formgebung unterscheiden. Die in Fig. 2 dargestellten Rückvolumenmodule 30 können beispielsweise jeweils mit einem im Wesentlichen starren, also unverformbaren Rückvolumenmodulgehäuse 32 aufgebaut sein.

Die Fig. 3 zeigt in ihren Darstellungen a) und b) ein Rückvolumenmodul 30, das in seiner Form veränderbar ist. Das Rückvolumenmodul 30 weist ein als flexibles Rohr, also beispielsweise als Kunststoff- oder Metallschlauch ausgebildetes Rückvolumenmodulgehäuse 32 mit einem darin gebildeten Rückvolumen 34 auf. Durch Veränderung der Formgebung des Rückvolumenmodulgehäuses 32 und entsprechend auch die Formgebung des darin gebildeten Rückvolumens 34 kann das akustische Verhalten der Schallerzeugungsbaugruppe 10 beeinflusst werden. Ferner ermöglicht die Ausgestaltung des Rückvolumenmodulgehäuses als flexibles, also grundsätzlich verformbares Bauteil eine Anpassung an die Formgebung des zur Verfügung stehenden Bauraums.

Schließlich zeigt die Fig. 4 in ihren Darstellungen a) und b) zwei Rückvolumenmodule 30, die unabhängig davon, dass sie auch unterschiedliche Größen ihrer Rückvolumina 34 aufweisen können, unterschiedlich geformte, beispielsweise starre, also unverformbar ausgebildete Rückvolumenmodulgehäuse 32 aufweisen. Auch somit kann eine Anpassung an verschiedene zur Verfügung stehende Bauräume und verschiedene geforderte akustische Charakteristiken erreicht werden.

Durch die Bereitstellung einer Vielzahl derartiger Rückvolumenmodule mit unterschiedlich gestalteten oder/und dimensionierten oder/und verformbaren Rückvolumenmodulgehäusen wird es erfindungsgemäß möglich, je nach gefordertem Einsatzzweck das geeignete Rückvolumenmodul auszuwählen und mit einem für den Einsatzzweck auch vorgesehenen Schallerzeugungsmodul zu verbinden. Dabei können auch mehrere verschiedene Schallerzeugungsmodule 10 bereitgehalten werden, die sich beispielsweise in der Anzahl bzw. auch in der Dimensionierung oder der akustischen Charakteristik der darin vorgesehenen Lautsprechereinheiten unterscheiden können. Es kann somit bei vergleichsweise geringer Anzahl an bereitzuhaltenden Modulen ein Schallerzeugungsbaugruppen-Bausatz vorgesehen werden, der eine hohe Variabilität im Aufbau der damit zu erzeugenden Schallerzeugungsbaugruppen gestattet.

Es ist abschießend darauf hinzuweisen, dass insbesondere die Rückvolumenmodule sich auch unterscheiden können in den eingesetzten Aufbaumaterialien der Rückvolumenmodulgehäuse bzw. sich unterscheiden können darin, ob bzw. in welcher Art und Weise ein derartiges Rückvolumenmodulgehäuse bereichsweise mit schalldämmendem oder schallreflektierendem Material ausgekleidet ist.

## Patentansprüche

1. Schallerzeugungsbaugruppen-Bausatz zum Aufbau einer Schallerzeugungsbaugruppe (10) für eine Abgasanlage einer Brennkraftmaschine, umfassend:
- wenigstens ein Schallerzeugungsmodul (16) mit einem an einem Abgasführungselement (12) einer Abgasanlage (14) anzubringenden Schallerzeugungsmodulgehäuse (18) und wenigstens einer in dem Schallerzeugungsmodulgehäuse (18) angeordneten Lautsprechereinheit (20), wobei in dem Schallerzeugungsmodulgehäuse (18) ein Teil-Rückvolumen (28) gebildet ist,
- eine Gruppe bereitstellend wenigstens zwei unterschiedliche Rückvolumenmodule (30) jeweils mit einem Rückvolumenmodulgehäuse (32) und einem in dem Rückvolumenmodulgehäuse (32) gebildeten Rückvolumen (34), wobei das Rückvolumenmodulgehäuse (32) des je nach Einsatzzweck als geeignet ausgewählten Rückvolumenmoduls (39) mit dem Schallerzeugungsmodulgehäuse (18) des wenigstens einen Schallerzeugungsmoduls (16) zur akustischen Kopplung des Rückvolumens (34) mit der wenigstens einen Lautsprechereinheit (20) verbindbar ist, wobei bei mit dem Schallerzeugungsmodulgehäuse (18) akustisch gekoppeltem Rückvolumenmodulgehäuse (32) das Teil-Rückvolumen (28) in Verbindung mit dem Rückvolumen (34) ist.

2. Schallerzeugungsbaugruppen-Bausatz nach Anspruch 1, **dadurch gekennzeichnet, dass** die Gruppe von Rückvolumenmodulen (30) wenigstens zwei vorzugsweise im Wesentlichen unverformbar ausgebildete Rückvolumenmodule (30) mit unterschiedlicher Form oder/und Größe ihrer Rückvolumina (34) umfasst.

3. Schallerzeugungsbaugruppen-Bausatz nach Anspruch 1 oder 2, **dadurch gekennzeichnet, dass** die Gruppe von Rückvolumenmodulen (30) wenigstens ein vorzugsweise als flexibles Rohr ausgebildetes Rückvolumenmodul (30) mit verformbarem Rückvolumenmodulgehäuse (32) zum Verändern der Form oder/und der Größe des Rückvolumens (34) umfasst.

4. Schallerzeugungsbaugruppen-Bausatz nach Anspruch 1, 2 oder 3, **dadurch gekennzeichnet, dass** an dem Schallerzeugungsmodulgehäuse (18) und an jedem Rückvolumenmodulgehäuse (32) Verbindungsformationen (36, 38) zum vorzugsweise lösbaren Verbinden des Schallerzeugungsmodulgehäuses (18) mit dem Rückvolumenmodulgehäuse (32) vorgesehen sind.

## Claims

1. Sound generation assembly unit kit for constructing a sound generation unit (10) for an exhaust system of an internal combustion engine, comprising:
- at least one sound generation module (16) with a sound generation module housing (18) to be arranged on an exhaust gas guide element (12) of an exhaust system (14) and at least one loudspeaker unit (20) arranged in the sound generation module housing (18), wherein a partial rear volume (28) is formed in the sound generation module housing (18),
- a group providing at least two different rear volume modules (30) with a rear volume module housing (32) each and with a rear volume (34) formed in the rear volume module housing (32),
wherein the rear volume module housing (32) of the rear volume module (39) selected as suitable for the individual purpose can be connected to the sound generation module housing (18) of the at least one sound generation module (16) for the acoustic coupling of the rear volume (34) to the at least one loudspeaker unit (20), wherein when the rear volume module housing (32) is acoustically coupled to the sound generation module housing (18), the partial rear volume (28) is in connection with the rear volume (34).

2. Sound generation assembly unit kit according to claim 1, **characterized in that** the group of rear volume modules (30) comprises at least two rear volume modules (30) adapted preferably essentially undeformable with a variable shape or/and size of its rear volumes (34).

3. Sound generation assembly unit kit according to claim 1 or 2, **characterized in that** the group of rear volume modules (30) comprises at least one rear volume module (30) adapted preferably as a flexible tube with a deformable rear volume module housing (32) for changing the form or/and the size of the rear volume (34).

4. Sound generation assembly unit kit in accordance with claim 1, 2 or 3, **characterized in that** connection formations (36, 38) are provided on the sound generation module housing (18) and on each rear volume module housing (32) for preferably detachably connecting the sound generation module housing (18) to the rear volume module housing (32).

## Revendications

1. Kit d'unité d'assemblage de génération de son pour la construction d'une unité de génération de son (10) pour un système d'échappement d'un moteur à combustion interne, comprenant :
- au moins un module de génération de son (16) avec un boîtier de module de génération de son (18) destiné à être disposé sur un élément de guidage de gaz d'échappement (12) d'un système d'échappement (14) et au moins une unité de haut-parleur (20) disposée dans le boîtier de module de génération de son (18), un volume arrière partiel (28) étant formé dans le boîtier de module de génération de son (18),
- un groupe fournissant au moins deux modules de volume arrière différents (30) avec un boîtier de module de volume arrière (32) chacun et avec un volume arrière (34) formé dans le boîtier de module de volume arrière (32), dans laquelle le boîtier de module de volume arrière (32) du module de volume arrière (39) sélectionné comme adapté à l'utilisation individuelle peut être relié au boîtier de module de génération de son (18) dudit au moins un module de génération de son (16) pour le couplage acoustique du volume arrière (34) avec ledit au moins un haut-parleur (20), le volume arrière partiel (28) étant relié au volume arrière (34) lorsque le boîtier de module de volume arrière (32) est couplé de manière acoustique avec le boîtier de module de génération de son (18).

2. Kit d'unité d'assemblage de génération de son selon la revendication 1, **caractérisé en ce que** le groupe de modules de volume arrière (30) comprend au moins deux modules de volume arrière (30) adaptés de préférence essentiellement indéformables avec une forme ou/et une taille variable de ses volumes arrières (34).

3. Kit d'unité d'assemblage de génération de son selon la revendication 1 ou 2, **caractérisé en ce que** le groupe de modules de volume arrière (30) comprend au moins un module de volume arrière (30) adapté de préférence comme tube flexible avec un boîtier de module de volume arrière déformable (32) pour modifier la forme et/ou la dimension du volume arrière (34).

4. Kit d'unité d'assemblage de génération de son selon la revendication 1, 2 ou 3, **caractérisée en ce que** des formations de raccordement (36, 38) sont prévues sur le boîtier de module de génération de son (18) et sur chaque boîtier de module de volume arrière (32) pour relier de préférence de manière amovible le boîtier de module de génération de son (18) au boîtier de volume arrière (32).
